# EUROPÄISCHE PATENTSCHRIFT

(11) **EP 0 680 940 B1**
(45) Veröffentlichungstag und Bekanntmachung des Hinweises auf die Patenterteilung: **01.10.1997**
(21) Anmeldenummer: 95106167.0
(22) Anmeldetag: 25.04.1995
(51) Int. Cl.: C04B 41/85, C04B 41/50, C09D 17/00

(54) **Dunkle bis schwarze, hochtemperaturbeständige Farbmittel und deren Verwendung**
High temperature resistant dark to black colorants and their use
Colorants sombres à noirs résistants aux hautes températures et leurs utilisations

(30) Priorität: 04.05.1994 DE 4415654
(43) Veröffentlichungstag der Anmeldung: 08.11.1995
(73) Patentinhaber: BAYER AG, 51368 Leverkusen (DE)
(72) Erfinder: Kröner, Walter, Dipl.-Ing., D-51061 Köln (DE)

(56) Entgegenhaltungen:
- EP-A- 0 162 429
- EP-A- 0 402 946
- EP-A- 0 440 958
- EP-A- 0 469 418
- DE-A- 2 510 027
- DE-A- 3 324 400

## Beschreibung

Die Erfindung betrifft dunkle bis schwarze, hochtemperaturbeständige Farbmittel und ihre Verwendung in Form von Pasten oder Suspensionen bei der Beschriftung oder Kennzeichnung von Feuerfestformkörpern.

Zur eindeutigen Identifizierung von Feuerfestformkörpern, insbesondere Feuerfeststeinen aus Bauxit, Silicasteinen, Tonerdesteinen, Feuerleichtsteinen, Dolomitsteinen, Schamottesteinen, Chromoxidsteinen und Zirkonsteinen, wurde bisher in den Rohling ein charakterisierender Schriftzug geprägt. Anschließend erfolgte der Brennvorgang bei hohen Temperaturen von >1200°C. Diese Vorgehensweise hat mehrere Nachteile. Zum einen ergeben sich Undichtigkeiten an den Fingen, wenn derartig hergestellte Steine zur Herstellung von Mauern oder Wänden verwendet werden. Zum anderen wird für jeden Schriftzug mindestens ein Stempel benötigt, um diesen Schriftzug in den Rohling zu prägen. Weiter hat man eine schlechte Lesbarkeit der Schrift auf dem teuren abgenutzten Stahlstempel, sowohl vor als auch nach dem Brand. Es wurde in der Vergangenheit auch nach Alternativen zu dieser Vorgehensweise gesucht. Aufgrund der hohen Temperaturbeanspruchung beim Brand der Rohlinge konnte bisher eine den Ansprüchen an die Lesbarkeit genügende Beschriftung mit Farben nicht durchgeführt werden, da sie beim Brand entweder abdampfen oder in den Formkörper eindiffundieren.

In EP-A 402 946 wird eine Musterfolie zum Einbrennen beansprucht, wobei ein Muster, das ein Pulver eines Metalles oder einer Metallverbindung enthält, das beim Einbrand in ein Oxid konvertiert wird, auf eine keramische Grünfolie aufgetragen wird. Die keramische Grünfolie wurde aus einem keramischen Pulver mit einem Harzbindemittel hergestellt. Weiterhin wird ein Verfahren zur Herstellung eines eingebrannten Musters auf einem keramischen Sinterkörper beschrieben.

In EP-A 162 429 wird ein Verfahren zum dauerhaften farbigen Kennzeichnen von Bauteilen aus Sinterkeramik beschrieben. Dabei wird das keramische Pulver zu dichten Grünlingen gepreßt oder mit Plastifizierungsmitteln extrudiert. Die Grünlinge werden vor dem Sinterprozeß mit färbenden Substanzen versehen, die sich beim Sintern mit den keramischen Pulvern verbinden.

Aufgabe der vorliegenden Erfindung war es daher, ein gegenüber dem Stand der Technik vereinfachtes Verfahren zur Beschriftung von Feuerfestformkörpern, insbesondere Feuerfeststeinen zur Verfügung zu stellen, die unter den Brennbedingungen beständig ist.

Eine weitere Aufgabe der vorliegenden Erfindung war es, ein Mittel zur Beschriftung zur Verfügung zu stellen, so daß nach dem Brand die Beschriftung gut lesbar ist.

Diese Aufgabe konnte durch die erfindungsgemäßen Farbmittel bzw. das erfindungsgemäße Verfahren zur Beschriftung gelöst werden.

Gegenstand der Erfindung ist ein Mittel zur Kennzeichnung von Feuerfestformkörpern aus einem Farbmittel A, einem Medium B, das bei Temperaturen oberhalb 1000°C restlos verbrennt oder abdampft, und gegebenenfalls untergeordneten Mengen eines Hilfsmittels C, wobei das Farbmittel A aus
- 10 bis 30 Gew.-%: Eisenoxid, insbesondere 20 bis 30 Gew.-%, gerechnet als Fe₂O₃,
- 20 bis 35 Gew.-%: Chromoxid, insbesondere 25 bis 35 Gew.-%, gerechnet als Cr₂O₃,
- 10 bis 35 Gew.-%: Braunstein, insbesondere 10 bis 20 Gew.-%, gerechnet als MnO₂,
- 15 bis 40 Gew.-%: Feldspat, insbesondere 25 bis 35 Gew.-% oder Gläsern der chemischen Zusammensetzung: 40-80 Gew.-% SiO₂, 0-20 Gew.-% B₂O₃, 1-15 Gew.-% Al₂O₃, O-15 Gew.-% Na₂O, 0-10 Gew.-% K₂O, 0-30 Gew.-% CaO, 0-25 Gew.-% ZnO, 0-10 Gew.-% SrO, 0-5 Gew.-% MgO, 0-20 Gew.-% BaO, 0-5 Gew.-% Li₂O oder Gemischen, besteht,
das Medium B
übliche Suspensions-, Dispersions- oder Pastenmittel und
das Hilfsmittel C
übliche Netz-, Dispergier-, Antiabsetzmittel, oberflächenspannungsmodifizierende Mittel, Haftvermittler oder deren Mischungen enthält und wobei das Farbmittel A 80 bis 20 Gew.-%, das Medium B 20 bis 80 Gew.-% und das Hilfsmittel C 0 bis 10 Gew.-% an der Gesamtmenge des Mittels ausmachen.

Die erfindungsgemäßen Mittel zeichnen sich dadurch aus, daß sie unter den Brennbedingungen beständig sind und gut lesbare, dunkle bis schwarze Beschriftungen erzeugen. Außerdem neigen sie nicht zu Migration in den Rohling, so daß der Schriftzug auch nach dem Brand noch gut lesbar ist. Die mit diesen Mitteln hergestellten Schriftzüge weisen eine glatte Oberfläche auf und sind abriebbeständig. Die erfindungsgemäßen Mittel können mit bekannten Techniken auf den Rohling aufgebracht werden, z.B. in Form von Pasten oder Suspensionen mittels Pinsel, Stempel, Sprüh- oder Siebdruckverfahren. Gegenüber der allgemein durchgeführten Prägetechnik ergibt sich ein erheblicher Kostenvorteil.

Ein weiterer Gegenstand der Erfindung ist ein Verfahren zur Kennzeichnung von Feuerfestformkörpern, das dadurch gekennzeichnet ist, daß die geformten Rohlinge der Feuerfestformkörper vor dem Brand mit einem erfindungsgemäßen Mittel beschriftet und danach gebrannt werden.

Der Brand wird in Abhängigkeit vom Rohling bei Temperaturen von 1100°C bis 1700°C durchgeführt.

Als Komponenten für die erfindungsgemäßen Mittel können handelsübliche, technische Produkte eingesetzt werden, wie z.B.
Fe₂O₃, Fe₃O₄, FeOOH;
Cr₂O₃ (als Pigment oder als Rohstoff für die aluminothermische Chromherstellung);
Braunstein (enthält im allgemeinen 79 bis 92 % MnO₂ und untergeordnete Mengen an Nebenbestandteilen (siehe Ullmanns Enzyklopädie der technischen Chemie, 4. Auflage, Band 16, S. 467-480));
Kali- oder Natronfeldspäte oder ähnlich zusammengesetzte synthetische Aluminiumsilikate, wie z.B. Nephelin (enthält im allgemeinen 60 bis 75 % SiO₂, 25 bis 15 % Al₂O₃, 15 bis 5 % K₂O, 7 bis 0 % Na₂O und untergeordnete Mengen an Nebenbestandteilen (siehe Ullmanns Enzyklopädie der technischen Chemie, 4. Auflage, Band 21, S. 376-384)).

Bevorzugt haben die Komponenten Teilchengrößen von <50 µm, besonders bevorzugt <30 µm.

Für das Medium B werden gängige Suspensions-, Dispersions- bzw. Pasten- und Bindemittel sowie Netzmittel, die bei Siebdruck- und Sprühverfahren üblicherweise Anwendung finden, eingesetzt (Ullmanns Enzyclopädie der technischen Chemie, 4. Auflage, Band 10, Seiten 194 und 198; Band 9, Seiten 207-211; Band 15, Seiten 675-726; Band 14, Seiten 8 und 9; Handbuch der Keramik, Beilage zur keramischen Zeitschrift 40 (1988) 6, Seite 6; Handbuch der Keramik (1981) Verlag Schmid GmbH, Gruppe IG 2 (Neufassung), Seiten 4-6).

Die Erfindung soll anhand folgender Beispiele näher erläutert werden.

### Beispiele

### Beispiel 1

- 300 g: Chromoxid (Chromoxid GN der Fa. Bayer AG),
- 250 g: Eisenoxid (Bayferrox® 222 der Fa. Bayer AG),
- 150 g: Braunstein (G 80 - 325 der Fa. Mario Pilato Blat S.A.) und
- 300 g: Kalifeldspat (INCUSA® der Fa. Industrias del Cuarzo S.A.)
werden in einem Labormischer 10 Minuten intensiv gemischt.

Aus 100 g dieser Mischung wird durch Zusatz von 35 ml einer wässrigen Polyethylenglykollösung (DECUFLUX® RM 33 der Fa. Z & S, Lahnstein) über einen Dreiwalzenstuhl (Fa. NETZSCH Gerätebau GmbH, Selb) eine intensiv gemischte Suspension hergestellt.

Rohlinge für Feuerfestformkörper, wie Korundsteine, Silikatsteine, Tonerdesteine, Schamottesteine und Zirkonsteine wurden vor dem Brand mit der beschriebenen Suspension mit Pinsel beschriftet. Danach wurden diese in einem Temperaturbereich zwischen 1230°C und 1580°C im Laborgasofen gebrannt. Die Beschriftung war dunkelbraun bis schwarz, je nach Stein und gut lesbar.

### Beispiel 2

- 250 g: Chromoxid (Chromoxid GN der Fa. Bayer AG),
- 150 g: Eisenoxid (Bayferrox® 222 der Fa. Bayer AG),
- 300 g: Braunstein (G 80 - 325 der Fa. Mario Pilato Blat S.A.) und
- 300 g: Kalifeldspat (INCUSA® der Fa. Industrias del Cuarzo S.A.)
werden in einem Labormischer 10 Minuten intensiv gemischt.

Aus 100 g dieser Mischung wird durch Zusatz von 35 ml einer wässrigen Polyethylenglykollösung (DECUFLUX® RM 33 der Fa. Z & S, Lahnstein) über einen Dreiwalzenstuhl (Fa. NETZSCH Gerätebau GmbH, Selb) eine intensiv gemischte Suspension hergestellt.

Rohlinge für Feuerfestformkörper, wie Korundsteine, Silikatsteine, Tonerdesteine, Schamottesteine und Zirkonsteine wurden vor dem Brand mit der beschriebenen Suspension mit Pinsel beschriftet. Danach wurden diese in einem Temperaturbereich zwischen 1230°C und 1580°C im Laborgasofen gebrannt. Die Beschriftung war dunkelbraun bis schwarz, je nach Stein und gut lesbar.

### Beispiel 3

- 300 g: Chromoxid (Chromoxid GN der Fa. Bayer AG),
- 250 g: Eisenoxid (Bayferrox® 222 der Fa. Bayer AG),
- 150 g: Braunstein (G 80 - 325 der Fa. Mario Pilato Blat S.A.) und
- 300 g: Nephelin Syenit (Nordkap® der Fa. DEGUSSA)
werden in einem Labormischer 10 Minuten intensiv gemischt.

Aus 100 g dieser Mischung wird durch Zusatz von 35 ml einer wässrigen Polyethylenglykollösung (DECUFLUX® RM 33 der Fa. Z & S, Lahnstein) über einen Dreiwalzenstuhl (Fa. NETZSCH Gerätebau GmbH, Selb) eine intensiv gemischte Suspension hergestellt.

Rohlinge für Feuerfestformkörper, wie Korundsteine, Silikatsteine, Tonerdesteine, Schamottesteine und Zirkonsteine wurden vor dem Brand mit der beschriebenen Suspension beschriftet. Danach wurden diese in einem Temperaturbereich zwischen 1230°C und 1580°C im Laborgasofen gebrannt. Die Beschriftung war dunkelbraun bis schwarz, je nach Stein und gut lesbar.

### Beispiel 4

- 350 g: Chromoxid (Chromoxid GN der Fa. Bayer AG),
- 150 g: Eisenoxid (Bayferrox® 222 der Fa. Bayer AG),
- 250 g: Braunstein (G 80 - 325 der Fa. Mario Pilato Blat S.A.) und
- 250 g: Kalifeldspat (INCUSA® der Fa. Industrias del Cuarzo S.A.)
werden in einem Labormischer 10 Minuten intensiv gemischt.

Aus 100 g dieser Mischung wird durch Zusatz von 35 ml einer wässrigen Polyethylenglykollösung (DECUFLUX® RM 33 der Fa. Z & S, Lahnstein) über einen Dreiwalzenstuhl (Fa. NETZSCH Gerätebau GmbH, Selb) eine intensiv gemischte Suspension hergestellt.

Rohlinge für Feuerfestformkörper, wie Korundsteine, Silikatsteine, Tonerdesteine, Schamottesteine und Zirkonsteine wurden vor dem Brand mit der beschriebenen Suspension beschriftet. Danach wurden diese in einem Temperaturbereich zwischen 1230°C und 1580°C im Laborgasofen gebrannt. Die Beschriftung war dunkelbraun bis schwarz, je nach Stein und gut lesbar.

### Beispiel 5

- 300 g: Chromoxid (Chromoxid GN der Fa. Bayer AG),
- 250 g: Eisenoxid (Bayferrox® 222 der Fa. Bayer AG),
- 150 g: Braunstein (G 80 - 325 der Fa. Mario Pilato Blat S.A.) und
- 300 g: Glas (chemische Zusammensetzung: SiO₂ 55,0 Gew.-%, Al₂O₃ 13,0 Gew.-%, B₂O₃ 17,0 Gew.-%, CaO 11,0 Gew.-%, K₂O 4,0 Gew.-%)
werden in einem Labormischer 10 Minuten intensiv gemischt.

Aus 100 g dieser Mischung wird durch Zusatz von 35 ml einer wässrigen Polyethylenglykollösung (DECUFLUX® RM 33 der Fa. Z & S, Lahnstein) über einen Dreiwalzenstuhl (Fa. NETZSCH Gerätebau GmbH, Selb) eine intensiv gemischte Suspension hergestellt.

Rohlinge für Feuerfestformkörper, wie Korundsteine, Silikatsteine, Tonerdesteine, Schamottesteine und Zirkonsteine wurden vor dem Brand mit der beschriebenen Suspension beschriftet. Danach wurden diese in einem Temperaturbereich zwischen 1230°C und 1580°C im Laborgasofen gebrannt. Die Beschriftung war dunkelbraun bis schwarz, je nach Stein und gut lesbar.

## Patentansprüche

1. Mittel zur Kennzeichnung von Feuerfestformkörpern aus einem Farbmittel A, einem Medium B, das bei Temperaturen oberhalb 1000°C restlos verbrennt oder abdampft, und gegebenenfalls untergeordneten Mengen eines Hilfsmittels C, wobei das Farbmittel A aus
10 bis 30 Gew.-% Eisenoxid, gerechnet als Fe₂O₃,
20 bis 35 Gew.-% Chromoxid, gerechnet als Cr₂O₃,
10 bis 35 Gew.-% Braunstein, gerechnet als MnO₂ und
15 bis 40 Gew.-% Feldspat oder Gläsern der chemischen Zusammensetzung: 40-80 Gew.-% SiO₂, 0-20 Gew.-% B₂O₃, 1-15 Gew.-% Al₂O₃, O-15 Gew.-% Na₂O, 0-10 Gew.-% K₂O, 0-30 Gew.-% CaO, 0-25 Gew.-% ZnO, 0-10 Gew.-% SrO, 0-5 Gew.-% MgO, 0-20 Gew.-% BaO, 0-5 Gew.-% Li₂O oder Gemischen davon,
besteht, das Medium B übliche Suspensions-, Dispersions- oder Pastenmittel und das Hilfsmittel C übliche Netz, Dispergier-, Antiabsetzmittel, oberflächenspannungsmodifizierende Mittel, Haftvermittler oder deren Mischungen enthält und wobei das Farbmittel A 80 bis 20 Gew.-%, das Medium B 20 bis 80 Gew.-% und das Hilfsmittel C 0 bis 10 Gew.-% an der Gesamtmenge des Mittels ausmachen.

2. Mittel gemäß Anspruch 1, wobei das Farbmittel A aus
20 bis 30 Gew.-% Eisenoxid, gerechnet als Fe₂O₃,
25 bis 35 Gew.-% Chromoxid, gerechnet als Cr₂O₃,
10 bis 20 Gew.-% Braunstein, gerechnet als MnO₂ und
25 bis 35 Gew.-% Feldspat oder Gläsern der chemischen Zusammensetzung: 40-80 Gew.-% SiO₂, 0-20 Gew.-% B₂O₃, 1-15 Gew.-% Al₂O₃, O-15 Gew.-% Na₂O, 0-10 Gew.-% K₂O, 0-30 Gew.-% CaO, 0-25 Gew.-% ZnO, 0-10 Gew.-% SrO, 0-5 Gew.-% MgO, 0-20 Gew.-% BaO, 0-5 Gew.-% Li₂O oder Gemischen davon, besteht.

3. Verfahren zur Herstellung von gekennzeichneten Feuerfestformkörpern, dadurch gekennzeichnet, daß die geformten Rohlinge der Feuerfestformkörper vor dem Brand mit einem Mittel gemäß den Ansprüchen 1 oder 2 beschriftet und danach gebrannt werden.

## Claims

1. A medium for marking refractory shaped bodies, comprising a colorant A, a medium B which burns or volatilises without a residue at temperatures above 1000°C, and optionally subsidiary amounts of an auxiliary agent C, wherein colorant A consists of
10 to 30 % by weight iron oxide, calculated as Fe₂O₃,
20 to 35 % by weight chromium oxide, calculated as Cr₂O₃,
10 to 35 % by weight pyrolusite, calculated as MnO₂, and
15 to 40 % by weight feldspar or glasses of chemical composition: 40-80 % by weight SiO₂, 0-20 % by weight B₂O₃, 1-15 % by weight Al₂O₃, 0-15 % by weight Na₂O, 0-10 % by weight K₂O, 0-30 % by weight CaO, 0-25 % by weight ZnO, 0-10 % by weight SrO, 0-5 % by weight MgO, 0-20 % by weight BaO, 0-5 % by weight Li₂O or mixtures thereof,
medium B contains customary suspension, dispersion or paste media, and auxiliary agent C contains customary wetting, dispersion or anti-settling agents, surface tension-modifying agents, bonding agents or mixtures thereof, and wherein colorant A makes up 80 to 20 % by weight, medium B makes up 20 to 80 % by weight, and auxiliary agent C makes up 0 to 10 % by weight of the total amount of medium.

2. A medium according to claim 1, wherein colorant A consists of
20 to 30 % by weight iron oxide, calculated as Fe₂O₃,
25 to 35 % by weight chromium oxide, calculated as Cr₂O₃,
10 to 20 % by weight pyrolusite, calculated as MnO₂, and
25 to 35 % by weight feldspar or glasses of chemical composition: 40-80 % by weight SiO₂, 0-20 % by weight B₂O₃, 1-15 % by weight Al₂O₃, 0-15 % by weight Na₂O, 0-10 % by weight K₂O, 0-30 % by weight CaO, 0-25 % by weight ZnO, 0-10 % by weight SrO, 0-5 % by weight MgO, 0-20 % by weight BaO, 0-5 % by weight Li₂O or mixtures thereof.

3. A method of producing marked refractory shaped bodies, characterised in that the moulded blanks of the refractory shaped bodies are marked before firing with a medium according to claims 1 or 2 and are thereafter fired.

## Revendications

1. Produit de marquage de corps moulés réfractaires comprenant un colorant A, un milieu B, qui est complètement décomposé à des températures supérieures à 1 000°C ou évaporé, et le cas échéant des quantités minimes d'un additif C, où le colorant A est constitué de
10 à 30 % en poids d'oxyde de fer, calculé sous forme de Fe₂O₃,
20 à 35 % en poids d'oxyde de chrome, calculé sous forme de Cr₂O₃,
10 à 35 % en poids de pyrolusite, calculé sous forme de MnO₂ et
15 à 40 % en poids de feldspath ou de vertes de composition chimique : 40-80 % en poids SiO₂, 0-20 % en poids B₂O₃, 1-15 % en poids Al₂O₃, 0-15 % en poids Na₂O, 0-10 % en poids K₂O, 0-30 % en poids CaO, 0-25 % en poids ZnO, 0-10 % en poids SrO, 0-5 % en poids MgO, 0-20 % en poids BaO, 0-5 % en poids Li₂O ou leurs mélanges,
le milieu B est constitué des produits en suspension, en dispersion ou en pâtes et l'additif C est constitué des mouillants, dispersants, des produits antisédimentation habituels, des produits modifiant la tension superficielle, des promoteurs d'adhérence ou leurs mélanges et où le colorant A représente 80 à 20 % en poids, le milieu B 20 à 80 % en poids et le promoteur d'adhérence C 0 à 10 % en poids de la quantité totale du produit.

2. Produit selon la revendication 1 où le colorant A est constitué de
20 à 30 % en poids d'oxyde de fer, calculé sous forme de Fe₂O₃,
25 à 35 % en poids d'oxyde de chrome, calculé sous forme de Cr₂O₃,
10 à 20 % en poids de pyrolusite, calculé sous forme de MnO₂ et
25 à 35 % en poids de feldspath ou de vertes de composition chimique : 40-80 % en poids SiO₂, 0-20 % en poids B₂O₃, 1-15 % en poids Al₂O₃, 0-15 % en poids Na₂O, 0-10 % en poids K₂O, 0-30 % en poids CaO, 0-25 % en poids ZnO, 0-10 % en poids SrO, 0-5 % en poids MgO, 0-20 % en poids BaO, 0-5 % en poids Li₂O ou leurs mélanges.

3. Procédé de préparation de corps moulés réfractaires caractérisé en ce que les ébauches moulées des corps moulés réfractaires sont marquées avant la cuisson avec un produit selon les revendications 1 ou 2 et ensuite on les fait cuire.
